# EUROPÄISCHE PATENTANMELDUNG

(11) **EP 1 522 828 A1**
(43) Veröffentlichungstag der Anmeldung: **13.04.2005**
(21) Anmeldenummer: 04021985.9
(22) Anmeldetag: 16.09.2004
(51) Int. Cl.: G01F 1/58

(54) **Magnetisch-induktives Messgerät für strömende Stoffe und Verfahren zu dessen Herstellung**

(30) Priorität: 10.10.2003 DE 10347878
(71) Anmelder: ABB PATENT GmbH, 68526 Ladenburg (DE)
(72) Erfinder: Huybrechts, Dirk, Dr.-Ing., 69121 Heidelberg (DE); Szasz, Paul, Dipl.-Ing., 68723 Plankstadt (DE); Eifel, Dominik, Dipl.-Ing., 68723 Schwetzingen (DE); Asaah, Eniet, Dipl.-Ing., 68309 Mannheim (DE); Schwiderski, Hans-Werner, Dipl.-Ing., 37176 Nörten-Hardenberg (DE); Thöne, Andreas, 37154 Northeim (DE); Huck, Ralf, Dr.-Ing., 63457 Hanau (DE); Scholz, Wolfgang, Dr.-Ing., 32427 Minden (DE); Lorito, Fabrizio, Mailand (IT); Vogel, Albrecht, Dr.-Ing., 76297 Stutensee (DE)
(74) Vertreter: Miller, Toivo

(57) **Zusammenfassung**

Die Erfindung betrifft ein magnetisch-induktives Messgerät (1) für strömende Stoffe (Messstoff), mit einem, Messrohr (2) und je einem weiteren Teilsystem
- zur Messsignalerfassung, umfassend einen Signalaufnehmer (Elektrodenanordnung (20, 22) zum Signalabgriff),
- zur Erzeugung eines Magnetfeldes, umfassend wenigstens zwei Erregerspulen (30) und einen ferromagnetischen Kern (32) (Magnetsystem), sowie
- zur umgebungsseitigen Gerätebegrenzung (Gehäuse),
und ist dadurch gekennzeichnet, dass wenigstens eines der weiteren Teilsysteme ganz oder teilweise durch eine Vergussmasse gebildet und/oder in eine Vergussmasse eingebettet ist.

## Beschreibung

Die Erfindung betrifft ein magnetisch-induktives Messgerät für strömende Stoffe - im folgenden auch kurz MID genannt -, gemäß dem Oberbegriff des Anspruchs 1, sowie ein Verfahren zur Herstellung eines magnetisch-induktiven Messgerätes für strömende Stoffe gemäß dem Oberbegriff des Anspruchs 25.

Magnetisch-induktive Messgeräte für strömende Stoffe sind im Stand der Technik seit langem bekannt. Ihr prinzipieller Aufbau und das Wirkprinzip sind beispielsweise beschrieben im Lexikon der Mess- und Automatisierungstechnik, Herausgegeben von Elmar Schrüfer, VDI-Verlag Düsseldorf 1992, S. 262-263. Aufgrund des Wirkprinzips können magnetisch-induktive Messgeräte nur zur Messung des Durchflusses von elektrisch leitfähigen fluiden Stoffen eingesetzt werden.

Der einfache und robuste mechanische Aufbau, insbesondere das gerade Messrohr ohne eingebaute Hindernisse oder bewegte Teile macht sie zu bevorzugt eingesetzten Messgeräten in einer Reihe von industriellen Prozessanlagen, beispielsweise im Bereich der Wasserwirtschaft (Durchflussmessung in der Trinkwasserbereitung und Abwasseraufbereitung), im Bereich der chemischen und petrochemischen Industrie (Durchflussmessung von Wasser, Säuren, Laugen, etc.), im Bereich der pharmazeutischen Industrie und im Bereich der Lebensmittelindustrie (Durchflussmessung von Wasser, Säften, Bier, Milchprodukten etc.).

Magnetisch-Induktive Messgeräte der gattungsgemäßen Art umfassen ein Messrohr, das von dem Messstoff durchflossen wird, und weitere, an das Messrohr angebrachte Teilsysteme, insbesondere ein Teilsystem zur Signalaufnahme, ein Teilsystem zur Erzeugung eines Magnetfeldes, kurz Magnetsystem genannt, ein Gehäuse zum Schutz vor Umwelteinflüssen und eine Anschlussvorrichtung zur Aufnahme der elektrischen Schnittstelle des Messgerätes.

Das Messrohr ist heute in der Regel ein Stahlrohr, mit oder ohne Endflanschen, mit am Außenumfang des Messrohres angeschweißten Verbindungselementen zur Montage anderer Gerätekomponenten und Teilsysteme an dem Messrohr. Der Einbau in das Prozessrohrleitungssystem kann entweder durch Flanschmontage erfolgen, oder auch durch Zwischenflansch-Montage, sog. Wafer-Montage.

Magnetisch Induktive Messgeräte werden heute in Applikationen mit einem Prozessdruck von bis zu 40 bar eingesetzt, was sehr hohe Anforderungen an die Druck- und Verformungsfestigkeit des Hydraulischen Systems stellt. Druckbedingte Verformungen und Vibrationen im hydraulischen System können zu Verzerrungen und geometrischen Verschiebungen in, auf dem Messrohr angebrachten, Signalaufnehmer- und Magnetsystemen führen und die Messgenauigkeit und Reproduzierbarkeit der Messung verschlechtern

Es sind heute für Nischenanwendungen auch Messrohre aus Keramik, teilweise mit darin eingebetteten Mess- und Abschirmelektroden, und aus Thermoplast bekannt geworden.

Es wurde auch vorgeschlagen, das Messrohr aus Faserverbundmaterial aufzubauen, beispielsweise aus glasfaserverstärktem Kunststoff (GFK). Ein solches Messrohr vereinigt mechanische Stabilität und Drucktragkraft mit chemischer Beständigkeit und elektrischer Isoliereigenschaft. Es zeigte sich, dass ein in Faserwickeltechnik hergestelltes Messrohr aus GFK -Material bereits mit einer Wandstärke von wenigen mm bei geeignetem Durchmesser einem Rohrinnendruck von 40 bar ohne unzulässige mechanische Deformation des Rohres dauerhaft standhält.

Da ein aus GFK gebildetes Messrohr ein elektrischer Isolator ist, wird keine zusätzliche isolierende Auskleidung (Liner) benötigt, was die Herstellung des Messgerätes deutlich vereinfacht und verbilligt.

Als Teilsystem zur Signalaufnahme sind heute konduktive und kapazitive Signalaufnehmer bekannt. Beim konduktiven Signalaufnehmer stehen die Elektroden mit dem Messstoff galvanisch in Verbindung. Konduktive Signalaufnehmer sind üblicherweise zwei Elektroden, die durch Bohrungen in das Messrohr eingeführt werden. Bei einem Messrohr aus Stahl müssen diese und die Elektroden elektrisch gegeneinander isoliert sein, daher ist es dann nötig, das Stahlrohr innen mit einer elektrisch nicht leitenden Schicht auszukleiden, dem sog. Liner. Die Montage des Messgerätes wird dadurch sehr aufwändig.

Beim kapazitiven Signalaufnehmer sind die Elektroden vom Messstoff galvanisch getrennt. Es werden flächenhafte Elektroden verwendet, die sich in oder hinter der elektrisch nicht leitfähigen Rohrauskleidung befinden. Außerdem sind Schirmelektroden zwischen Messelektrode und Messrohr zur Verhinderung des kapazitiven Durchgriffs nach außen vorgesehen.

Das Teilsystem zur Erzeugung eines Magnetfeldes wird heute in der Regel durch zwei Spulen mit Polen und einer magnetischen Rückführung realisiert, die um das Messrohr herum montiert werden. Die bei der Montage einzuhaltenden geometrischen Toleranzen sind sehr gering, was die Montage aufwändig und teuer macht.

Die magnetische Rückführung wird dabei üblicherweise aus mehreren übereinander geschichteten und miteinander vernieteten Blechstreifen realisiert. Es sind dabei mehrere Fertigungsschritte notwendig um sie in dieser Form zu erzeugen.

Das Gehäuse stellt in heute gebräuchlichen magnetisch-induktiven Durchflussmessern (MID) einen erheblichen Kostenfaktor dar, weil es entweder aus separaten, z.B. im Druckgussverfahren hergestellten Halbschalen oder auch als eine Blechschweißkonstruktion realisiert wird.

Ein technischer Nachteil besteht darin, dass Verbindungselemente innerhalb des Gehäuses, z.B. Kabel, nicht durch die Anbringung des Gehäuses allein lagefixiert werden können. Vibrationen der Anschlussleitungen können, insbesondere bei kapazitiven Signalaufnehmem, zu erheblichen Signalstörungen und damit Messungenauigkeiten führen.

Die Anschlussvorrichtung ermöglicht die Verbindung des Messgerätes mit der Auswerteelektronik, die in einer häufig auch als Transmitter oder Messumformer bezeichneten Baugruppe untergebracht ist. Der Transmitter kann sich räumlich getrennt vom Messgerät befinden, oder auch in den Anschlusskasten integriert sein.

Der heute übliche Herstellungsprozess ist geprägt von relativ kleinen Seriengrößen pro Gerätevariante einerseits und einer hohen Anzahl an Gerätevarianten andererseits. Da das Teilsystem für die Magnetfelderzeugung mechanisch an das hydraulische System angebaut ist, bedingt jede Variante im hydraulischen System auch unterschiedliche Montagesätze für das angebaute Teilsysteme.

Es ist daher die Aufgabe der vorliegenden Erfindung, ein magnetisch induktives Messgerät zu schaffen, das kostengünstig zu fertigen ist und die ganze Breite der Einsatzbereiche mit einer sehr geringen Variantenvielfalt abdeckt.

Die Aufgabe wird hinsichtlich des Messgerätes gelöst durch die kennzeichnenden Merkmale des Anspruchs 1, und hinsichtlich des Verfahrens zu dessen Herstellung durch die kennzeichnenden Merkmale des Anspruchs 25.

Erfindungsgemäß also ist wenigstens eines der weiteren Teilsysteme ganz oder teilweise durch eine Vergussmasse gebildet und/oder in eine Vergussmasse eingebettet.

In einer besonders vorteilhaften Ausführungsform der Erfindung kann das Magnetsystem vollständig oder in Teilen in eine elektrisch nicht leitfähige Vergussmasse eingebettet sein.

Dabei kann der ferromagnetische Kern allein oder die Erregerspulen zusammen mit dem ferromagnetischen Kern in eine elektrisch nicht leitfähige Vergussmasse eingebettet sein.

Gemäß einer weiteren bevorzugten Ausführungsform der Erfindung ist das Magnetsystem in das aus einer elektrisch nicht leitfähigen Vergussmasse gebildete Gehäuse eingebettet.

Der technische Vorteil dieser erfindungsgemäßen Ausführungsform liegt darin, dass das Magnetsystem sehr gut und dauerhaft ortsfest fixiert ist und gleichzeitig vor äußeren Einwirkungen wie beispielsweise Feuchte, Schmutz, Vibrationen etc. geschützt ist, wobei alle evtl. vorhandenen Hohlräume zwischen dem Messrohr und der umgebungsseitigen Grätebegrenzungsfläche automatisch ausgefüllt werden. Die Fertigung ist dabei sehr kostengünstig durchführbar.

Ein erfindungsgemäßes Messgerät hat ein bekanntes Messrohr, beispielsweise aus Metall mit einer isolierenden Auskleidungsschicht und konduktiven Elektroden, oder einem in Faserwickeltechnik gebildeten Messrohr mit eingebetteten kapazitiven Signalabgriffselektroden, oder aus Keramik mit konduktiven oder kapazitiven Elektroden, oder aus Thermoplast mit konduktiven oder kapazitiven Elektroden, oder aus Keramik oder Thermoplast ohne eingebettete Elektroden.

Die Druckfestigkeit und chemische Beständigkeit gegenüber dem Messstoff wird von dem Messrohr aufgebracht. Ein Messrohr aus Faserverbundwerkstoff beispielsweise vereinigt mechanische Stabilität und Drucktragkraft mit chemischer Beständigkeit und elektrischer Isoliereigenschaft

Als Vergussmasse kommt beispielsweise ein elektrisch nicht leitfähiges, gefülltes Epoxidharz oder ein elektrisch nicht leitfähiges, gefülltes Polyurethan in Betracht. Die Vergussform kann entweder aus Blech oder Kunststoff sein, wiederverwendbar oder als "verlorene Form" ausgeführt sein.

Neben dem Einbetten des Magnetsystems ist auch das Einbetten der elektrischen Zuleitungen in die elektrisch nicht leitfähige Vergussmasse möglich. Die Zuleitungen sind dann ohne großen Aufwand vibrationsfrei gehalten, was eine erhöhte Messgenauigkeit und Störsicherheit zur Folge hat.

Weiterhin kann auch eine elektronische Signalwandlerbaugruppe, beispielsweise ein Impedanzwandler bei kapazitivem Signalabgriff und/oder ein elektronischer Signalvorverstärker nahe bei den Messelektroden angeordnet und in die elektrisch nicht leitfähige Vergussmasse mit eingebettet sein.

Ein weiterer Vorteil liegt in der sehr guten Lagefixierung des ferromagnetischen Kerns, wenn er in Schichten aus Faserverbundwerkstoff eingebettet ist. Während bei herkömmlichen Systemen ein hoher Aufwand getrieben werden muss, wenn es darum geht, ein vibrationsunempfindliches und schockresistentes System aufzubauen (durch mechanische Mittel oder zusätzliche Verklebungen) ist dies beim in Vergussmasse eingebetteten Magnetsystem automatisch und ohne zusätzlichen Aufwand gegeben.

Es muss außerdem kein zusätzlicher Korrosionsschutz am Magnetsystem vorgenommen werden, da durch das Einbetten in Vergussmasse das Magnetsystem vollkommen geschützt ist.

Nach der Vormontage der elektrischen und magnetischen Komponenten des signalaufnehmenden Systems und des Magnetsystems werden diese Komponenten durch Vergießen mit einer Vergussmasse mit einer die Gehäusefunktion realisierenden Schicht umgeben. Der Kostenvorteil ergibt sich daraus, dass nur wenig Material und Fertigungszeit für diesen Fertigungsschritt benötigt wird.

Der technische Vorteil ergibt sich daraus, dass hierbei alle Komponenten in hervorragender Art und Weise dauerhaft ortsfest fixiert werden.

In das auf diese Weise gegossene Gehäuse kann eine Abschirmschicht gegen elektromagnetische Störfelder (EMF-Abschirmung) eingelegt und mit vergossen werden. Diese Schicht kann z.B. aus einem metallischen Gewebe oder Geflecht, z.B. aus Kupfer o.ä. oder aus leitfähigen Kunststoffen bestehen.

Weitere vorteilhafte Ausgestaltungen und Verbesserungen der Erfindung und weitere Vorteile sind den weiteren Unteransprüchen zu entnehmen.

Anhand der Zeichnungen, in denen 6 Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Fig. 1: eine Querschnittsansicht einer Ausführungsform eines erfindungsgemäßen MID, bei dem das Magnetsystem und der Signalwandler in das aus einer Vergussmasse gebildete Gehäuse eingebettet sind,
- Fig. 2: eine Querschnittsansicht einer zweiten Ausführungsform eines erfindungsgemäßen MID,
- Fig. 3: eine Querschnittsansicht einer dritten Ausführungsform eines erfindungsgemäßen MID,
- Fig. 4: einen Längsschnitt durch ein erfindungsgemäßes MID, bei dem nur das Magnetsystem in eine Vergussmasse eingebettet ist,
- Fig. 5: einen Längsschnitt durch ein erfindungsgemäßes MID, bei dem das Magnetsystem teilweise in eine Vergussmasse eingebettet ist, sowie
- Fig. 6: einen Längsschnitt durch ein MID, bei dem zusätzliche Sensoren zur Temperatur- und Dehnungsmessung eingebettet sind.

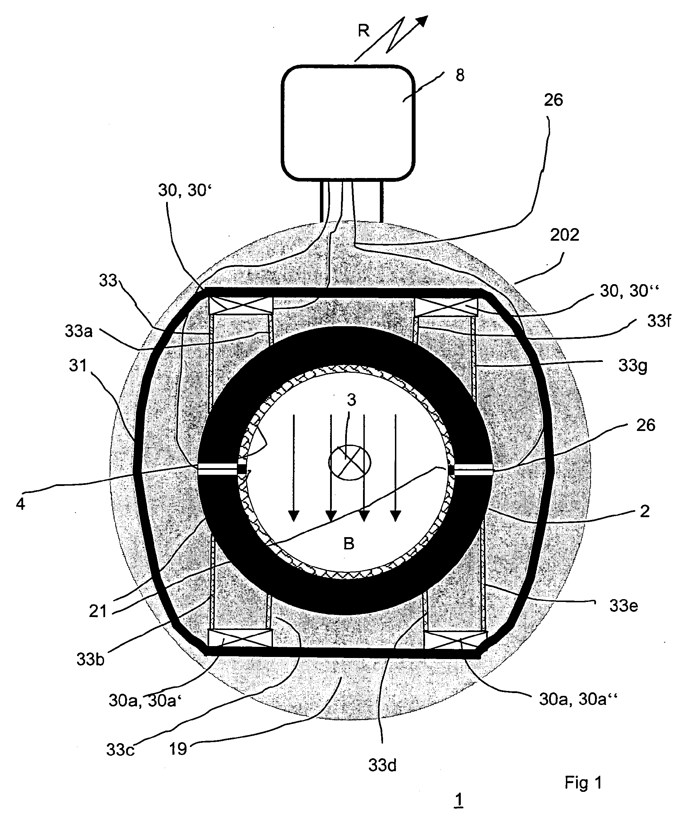

Fig 1 zeigt einen Querschnitt durch ein magnetisch induktives Messgerät 1, welches ein Messrohr 2 aus Stahl mit zwei sich senkrecht zur Messrohrmittelachse 3 gegenüberliegenden konduktiven Messelektroden 21 und einer an der Rohrinnenwand 4 angebrachten isolierenden Auskleidungsschicht 4 umfasst.

An der Außenseite des Messrohres 2 ist ein Magnetsystem mit zwei kreisringförmigen Erregerspulen 30, 30a und einem ferromagnetischen Kern 31 mittels bekannter Montagemittel 33, 33a, 33b, 33c, 33d, 33e, 33f, 33g - das sind Träger, Bolzen, Schrauben, Klemmen und ähnliche Teile -, die in der Fig. 1 nur schematisch angedeutet sind und hier nicht näher beschrieben zu werden brauchen, da sie dem Fachmann auf dem Gebiet des Baues von MIDs hinlänglich bekannt sind, angebracht. Die Wicklungsebenen der kreisringförmigen Spulen 30, 30a verlaufen parallel zueinander und zur Rohrmittelachse 3. Wegen der Darstellung im Querschnitt sind von den kreisringförmigen Spulen 30, 30a nur die Schnittflächen 30', 30", 30a', 30a" zu sehen. Der ferromagnetische Kern 31 ist in konventioneller Art und Weise aus mehreren übereinander geschichteten und miteinander vernieteten Blechstreifen realisiert. Durch das Magnetsystem wird ein im Inneren des Messrohres 2 senkrecht zur Rohrmittelachse 3 und zu den Messelektroden 21 verlaufendes Magnetfeld erzeugt, dessen verlauf durch die Pfeile B angedeutet ist.

Das Magnetsystem ist in eine das Messrohr umhüllende Schicht 19 aus Vergussmasse eingebettet. Zusammen mit dem Magnetsystem sind auch die elektrischen Zuleitungen zu den Spulen und zu den Messelektroden mit in die Vergussmasse eingebettet. In der vorliegenden Ausführungsform ist diese Vergussmasse ein elektrisch nicht leitfähiges, gefülltes Epoxydharz. Die Vergussmasse haftet an der Außenfläche des Messrohres 2, so dass kein Zwischenraum oder Spalt zwischen Messrohr und Vergussmasse entsteht, in den eventuell Schmutz oder Feuchtigkeit eindringen könnte. Die umhüllende Schicht 19 umgibt das Magnetsystem vollständig. Ihre Außenumfangskontur ist zylinderförmig. Sie bildet nach außen hin das Gehäuse des Messgerätes 1 und schützt alle in ihr eingegossenen Teilsysteme vor dem Eindringen von Staub und Wasser. Die Oberflächenqualität der umhüllenden Schicht kann - bei entsprechend sorgfältiger Prozessführung des Gießvorganges- sehr gut, glatt und fehlstellenfrei sein.

Alle eingegossenen Komponenten und Teilsysteme sind somit in hervorragender Weise und dauerhaft ortsfest fixiert. Die Magnetspulen und der ferromagnetische Kern können sich nicht mehr gegeneinander verdrehen, wenn beispielsweise im Betrieb des Messgerätes Vibrationen oder Erschütterungen auftreten sollten. Daher können die Anforderungen an die mechanische Fixierung des Magnetsystems auf dem Messrohr 2 herabgesetzt werden, wodurch die Herstellung des Messgerätes einfacher und billiger wird. Die mechanische Fixierung des Magnetsystems muss nur noch so robust ausgelegt sein, dass sie die Spule und die Magnetrückführung während des Vergießens und Aushärtens unverrückt in Position hält, was eine niedrigere Anforderung ist als sie heute an die mechanische Fixierung gestellt wird.

Auf dem durch die Vergussmasse gebildeten Gehäuse ist ein Transmitter 8 befestigt, welcher elektronische Schaltungen zur Magnetfeldsteuerung, Messsignalaufnahme, Messsignalverarbeitung und Kommunikation umfasst. Hier umfasst der Transmitter 8 eine drahtlose Signalübertragungseinheit, zur drahtlosen Signalübertragung - angedeutet durch den Pfeil R - und damit drahtlosen Einbindung des MIDs in ein übergeordnetes Prozessleitsystem.

Zum Aufbringen der Vergussmasse 19 wird das Messrohr 2 nach der Montage des Magnetsystems mit einer Vergussform umhüllt. Die Form wird gegenüber dem Messrohr und in sich abgedichtet und ist mit einem Zu- und einem Ablauf versehen. In diese Form wird die Vergussmasse, beispielsweise gefülltes Epoxydharz, eingefüllt und ausgehärtet. Anschließend wird die Form entfernt. Die Vergussform kann entweder aus Blech oder Kunststoff sein, wiederverwendbar oder als "verlorene Form" ausgeführt sein.

Gegenüber der konventionellen Aufbautechnik eines MID bringt das Vergießen des Magnetsystems neben den technischen auch erhebliche wirtschaftliche Vorteile, denn der Verguss ist wesentlich weniger arbeitsintensiv, größtenteils automatisiert durchführbar und daher kostengünstiger im Vergleich zu der konventionellen-Montage.

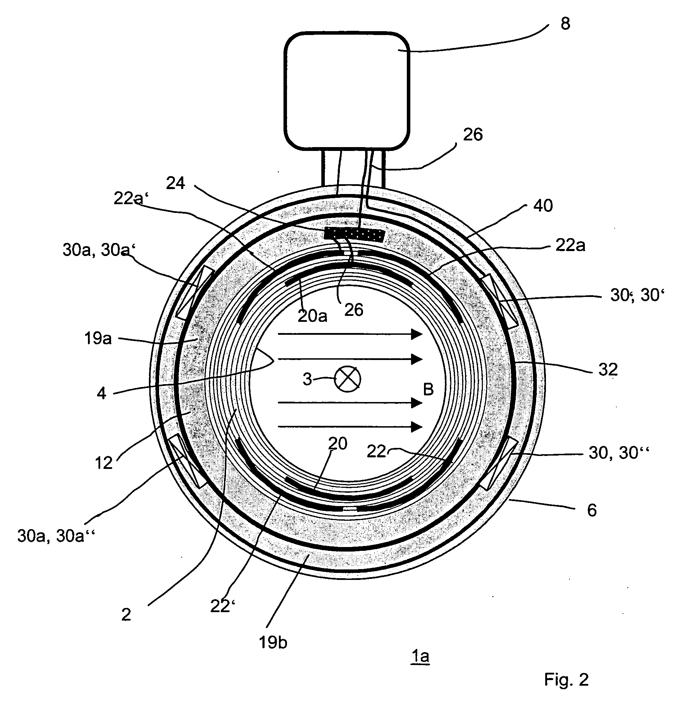

In den Figuren 2 bis 6 ist eine, nicht als abschließend zu betrachtende, Anzahl von Varianten der oben ausführlich dargestellten Ausführungsform nach Fig. 1 gezeigt. Im Folgenden sollen daher im Wesentlichen die sich von der Ausführungsform nach Fig. 1 unterscheidenden Teile besprochen werden. Ähnliche oder gleichwirkende Teile oder Baugruppen werden dabei jeweils mit den gleichen Bezugsziffern bezeichnet.

In Fig. 2 ist eine weitere Ausführungsform eines erfindungsgemäßen MID 1 a dargestellt. Das Messrohr 2 ist ein aus geschichtetem Faserverbundwerkstoff aufgebautes Messrohr mit kapazitivem Signalabgriff, wobei zwei flächenhafte Messelektroden 20, 20a und zwei die Messelektroden gegen den Durchgriff äußerer elektrischer Felder abschirmende, geteilt ausgeführte, Abschirmelektroden 22, 22' und 22a, 22a' in die Schichten aus Faserverbundwerkstoff es Messrohres 2 eingebettet sind.

In der Vergussmasse 19 ist hier auch eine elektronische Signalwandlerbaugruppe 24 eingebettet, ein Impedanzwandler und Messsignalvorverstärker, der auf diese Weise nahe an den Messelektroden 20, 20a angeordnet sein kann. Gerade bei kapazitivem Signalabgriff ist es sehr wichtig, dass der Impedanzwandler so nahe wie möglich bei den Messelektroden angeordnet ist und die Verbindungsleitungen vibrationsfrei gelagert sind, damit eine fehlerfreie Signalaufnahme auch kleinster Messsignale und entsprechend eine große Messgenauigkeit und Auflösung erreicht werden kann.

Der ferromagnetische Kern 32 ist bei der Ausführungsform nach Fig. 2 aus ferromagnetischem, biegbaren Bandmaterial gebildet. Die Vergussmasse wird in zwei Teilschritten aufgebracht. Zunächst wird der innere Teil 19a gegossen. Auf diesen wird der ferromagnetische Kern aufgelegt und fixiert, beispielsweise durch heften oder Kleben, und ebenso werden die kreisringförmigen Erregerspulen 30, 30a auf den ferromagnetischen Kern gelegt und fixiert. Nun wird der äußere Teil 19b gegossen, wobei der äußere Teil auch aus einem anderen Material gegossen werden kann als der innere Teil 19a. In den äußeren Teil 19b kann beim Gießen auch eine Schirmungsschicht 40, bestehend beispielsweise aus einer elektrisch leitfähigen Metallfolie, einem Metallgeflecht oder einer Folie aus elektrisch leitfähigem Kunststoff, mit eingegossen werden.

Es kann allerdings bei entsprechend geeigneter Vergussmasse in einem Schritt gegossen werden. Dann werden zunächst Spulen und Kern zusammen fixiert, die Vergussmasse fließt beim anschließenden Vergießen in alle Hohlräume und füllt sie vollständig aus.

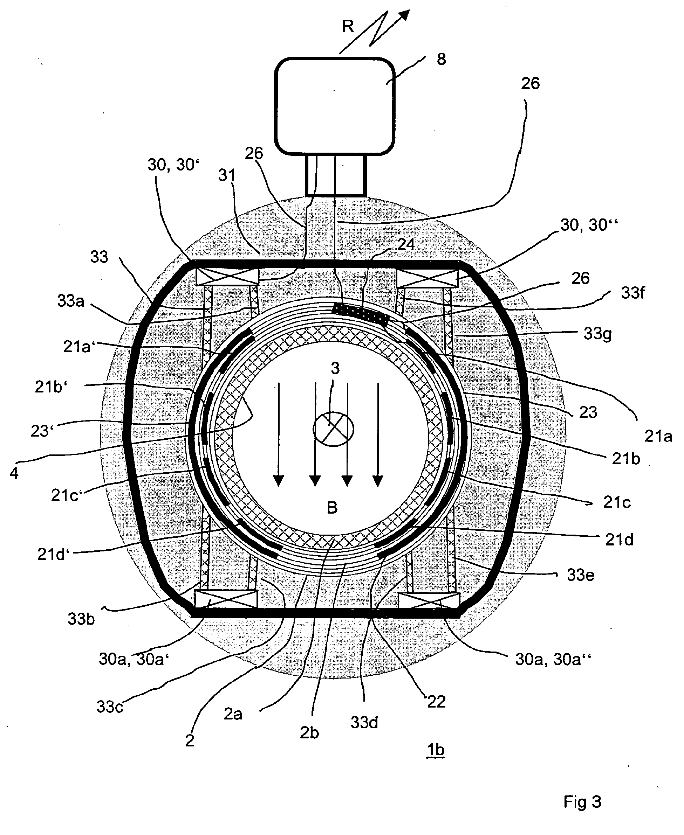

Bei der Ausführungsform nach Fig. 3 ist das Messrohr 2 aus zwei konzentrisch ineinandergreifenden Teilrohren 2a und 2b gebildet. Das erste, innere Teilrohr 2a besteht aus Thermoplast. Es ist sehr preiswert herzustellen, besitzt aber eine ungenügende Druckfestigkeit. Um das innere Teilrohr 2a herum ist aus Schichten von Faserverbundmaterial ein zweites, äußeres Teilrohr 2b gebildet. Das Äußere Teilrohr 2b verleiht dem Messrohr 2 die nötige Druckfestigkeit, damit es im geforderten Druckbereich bis zu 40 bar betrieben werden kann.

In die Schichten des äußeren Teilrohres 2a ist ein kapazitives Signalaufnahmesystem als Mehrelektrodenanordnung mit vier Messelektrodenpaaren 21 a, 21 a'; 21 b, 21 b'; 21 c, 21 c'; 21 d, 21 d' und einem Abschirmelektrodenpaar 23, 23' eingebettet, wobei jedes der Messelektrodenpaare jeweils ein Segment der inneren Mantelfläche des äußeren Messrohres 2b bedeckt. Mit einer solchen Mehrelektrodenanordnung ist es möglich, neben der Durchflussmessung auch noch eine Füllstandserfassung und -messung vorzunehmen. Diese Art der Füllstandserfassung und -messung mittels kapazitiver Mehrelektrodenanordnungen ist im Stand der Technik grundsätzlich bekannt. Sie ist nicht auf vier Messelektrodenpaare beschränkt, es könne auch drei, vier, fünf, sechs, sieben, acht oder noch mehr Elektrodenpaare angeordnet sein. Die Signalwandlerbaugruppe ist in diesem Ausführungsbeispiel ebenfalls in die Schichten aus Faserverbundwerkstoff des äußeren Teilrohres 2b eingebettet.

Die Einbettung des auf dem Messrohr 2 montierten Magnetsystems in eine Vergussmasse 19 erfolgt wie unter Fig. 1 beschrieben.

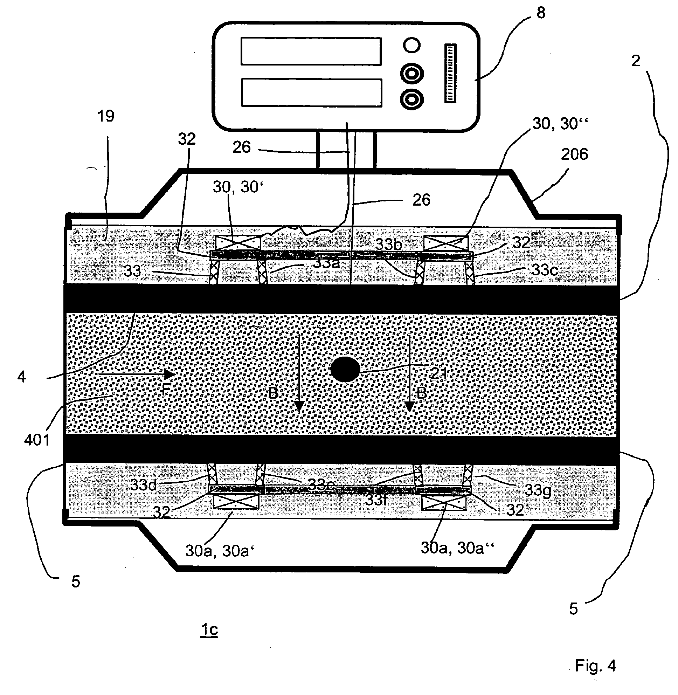

Fig. 4 zeigt einen Längsschnitt durch eine Ausführungsform eines erfindungsgemäßen MID mit einem Messrohr 2 aus Stahl mit isolierender Auskleidung 401 und konduktivem Signalabgriff 21, bei dem nur das Magnetsystem, umfassend die beiden Erregerspulen 30, 30a und den ferromagnetischen Kern 32 mit den Montagemitteln 33, 33a, 33b, 33c, 33d, 33e, 33f, 33g, in die Vergussmasse 19 eingebettet ist. Die Vergussmasse 19 ist in konventioneller Technik beispielsweise aus Druckguss-Halbschalen hergestellt. Der Vorteil dieser Ausführungsform liegt in der kostengünstigen Herstellbarkeit bei sehr hoher geometrischer Präzision des Magnetsystems, unter Beibehaltung bewährter Teilsysteme für Messrohr, Signalabgriff und Gehäuse.

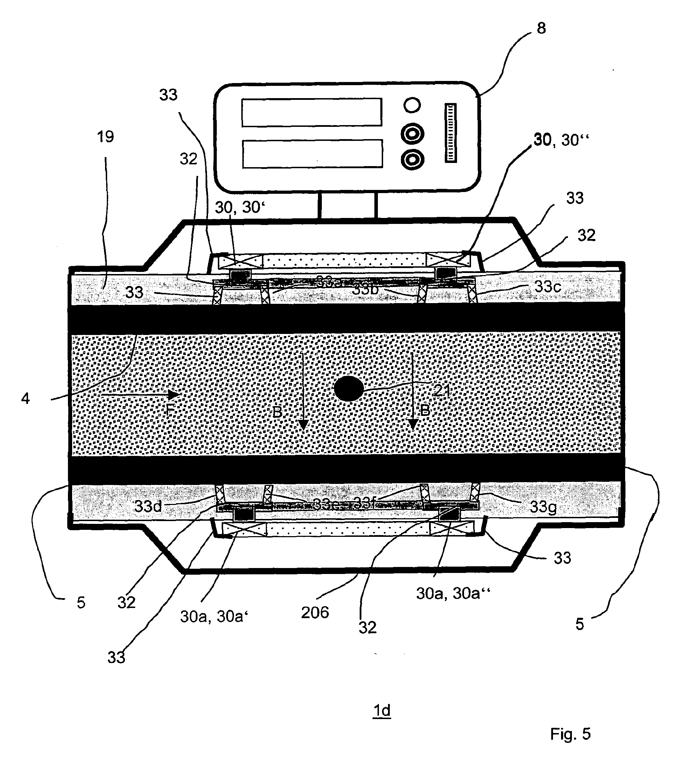

In der Ausführungsform nach Fig. 5 ist das Magnetsystem nur teilweise in die Vergussmasse 19 eingebettet. Der ferromagnetische Kern 32 mit den Montagemitteln 33, 33a, 33b, 33c, 33d, 33e, 33f, 33g ist eingebettet, die beiden Erregerspulen 30, 30a sind konventionell montiert. Es könnten auch die Erregerspulen 30, 30a in der Vergussmasse 19 eingebettet sein und der ferromagnetische Kern 32 in konventioneller Art und Weise darauf montiert sein. Die Ausführungsform nach Fig. 5 bietet gegenüber einer konventionellen Aufbauweise eines MIDs immer noch Kostenvorteile und erhöhte geometrische Präzision bei der Befestigung des Magnetsystems, gleichzeitig erfordert sie eine weniger weitgehende Umstellung des Produktionsverfahrens als die Ausführungsformen wie sie in den Fig. 1 bis 4 dargestellt sind.

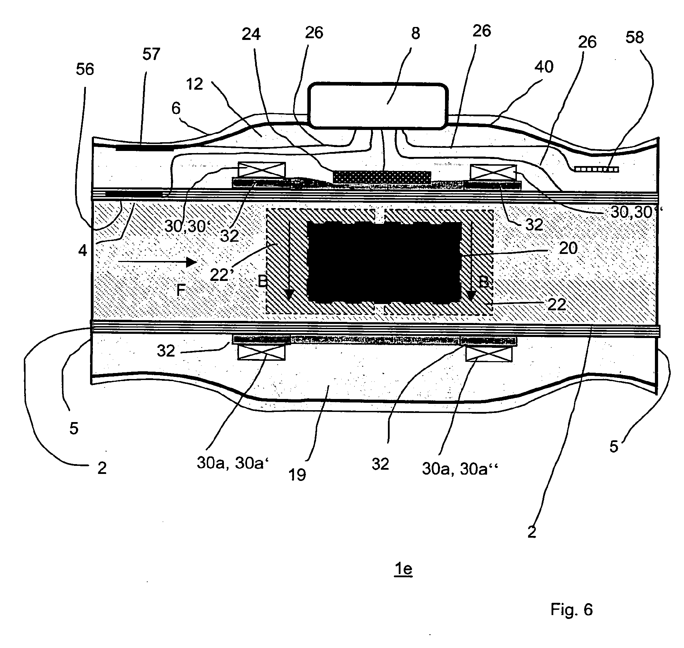

Alle heute üblichen und verfügbaren MIDs sind auf die Messung des Durchflusses von strömenden Stoffen fokussiert und verfügen darüber hinaus über keine zusätzlichen Messmittel, aus denen sich zusätzliche Informationen über andere Messgrößen aus dem Messstoffes oder auch des Messgerätes selbst ableiten und beispielsweise zu Diagnosezwecken verwenden ließen. Fig. 6 zeigt im Längsschnitt eine Ausführungsform eines erfindungsgemäßen MID, das diesen Nachteil des Standes der Technik überwindet. Fig. 6 zeigt einen Längsschnitt durch eine Ausführungsform eines erfindungsgemäßen MID, die weitgehend der in Fig. 2 im Querschnitt gezeigten Ausführungsform entspricht. Im Unterschied zu der Ausführungsform gemäß der Fig. 2 ist in Fig. 6 das Magnetsystem mit dem ferromagnetischen Kern 32 und den Spulen 32, 32a direkt auf dem aus Faserverbundwerkstoff gebildeten Messrohr 2 befestigt und in Vergussmasse 19 eingebettet. Die strichlüerte Umrandung bei der Mess- und geteilten Schirmelektrode 20, 22, 22' zeigt an, dass diese sich eingebettet hinter den ersten Wicklungsschichten des Messrohres 2 befinden.

Zusätzlich sind in der Ausführungsform nach Fig. 6 in die Messrohrwand 2 aus Faserverbundmaterial und in die Vergussmasse 19 noch weitere Sensoren eingebettet.

Nahe der messstoffseitigen Gerätebegrenzungsfläche 4 ist ein erster Temperatursensor 56 in die Messrohrwand aus Faserverbundwerkstoff eingebettet. Er kann sehr nahe an der messstoffseitigen Gerätebegrenzungsfläche 4 oder auch direkt in Berührung mit dem Messstoff eingebettet werden, so dass mit ihm die Messstofftemperatur an der Rohrinnenwand gut erfasst werden kann. Als Temperatursensor kommen alle gängigen Typen, die heute auch in miniaturisierter Form erhältlich sind, in Frage, wie beispielsweise resistive Temperatursensoren, Thermoelemente oder Halbleiter-Temperatursensoren.

In der Nähe der umgebungsseitigen Gerätebegrenzungsfläche 6 ist ein zweiter Temperatursensor 57 in die Vergussmasse 19 eingebettet. Mit diesem kann die Wandtemperatur oder die Umgebungstemperatur des Messgerätes erfasst werden. Die Verarbeitung der Sensorsignale der beiden Temperatursensoren erfolgt im Transmitter 8, könnte aber auch bereits in der Signalwandlerbaugruppe 24 vorgenommen werden.

Aus der Differenz der von den beiden Temperatursensoren 56, 57 ermittelten Temperaturwerte lässt sich unter Kenntnis der Geometrie und der Materialeigenschaften des Faserverbundmaterials und der Vergussmasse 19 der thermische Wärmestrom und daraus die zwischen dem Messstoff und der Umgebung ausgetauschte Energie berechnen. Damit wäre eine Überwachung der Einhaltung der zulässigen Einsatzgrenzen des Gerätes möglich. Auch die Restlebensdauer des Messrohres oder des ganzen Messgerätes könnte aufbauend auf den erfassten Temperaturwerten abgeschätzt werden. Dazu wird im Transmitter 8 oder bereits in der Signalwandlerbaugruppe 24 zusätzlich ein Mikroprozessor mit Speicher integriert, in dem ein entsprechendes Lebensdauermodell als Software implementiert ist. Die Temperaturmesswerte werden dort gespeichert, der historische Verlauf der Temperaturen wird dann dem Lebensdauermodell als eine Eingangsgröße zugeführt, und die zu erwartende Restlebensdauer wird berechnet und über den Transmitter zur Anzeige oder Weiterverarbeitung in einem übergeordneten Prozessleit- oder Anlagenmanagementsystem weitergeleitet.

Weiterhin ist etwa in der Mitte zwischen dem Messrohr und der umgebungsseitigen Gerätebegrenzungsfläche 6 in die Vergussmasse 19 ein Dehnungssensor 58 eingebettet. Dies kann beispielsweise ein Dehnmessstreifen oder eine Dehnmessstreifen-Anordnung in Brückenschaltung aus metallbasierten oder halbleiterbasierten Dehnmessstreifen sein. Mit dem Dehnungssensor 58 wird der mechanische Spannungszustand im Vergusskörper 19 ermittelt. Es können auch mehrere Dehnungssensoren an mehreren Stellen im Vergusskörper 19 verteilt eingebettet werden. Aus den so gewonnen Informationen kann der mehrachsige Spannungszustand des Messgerätes berechnet, und damit die zulässige Beanspruchung in der jeweiligen Einbausituation überwacht werden.

Die im Vorstehenden beschriebenen Ausführungsbeispiele geben nicht abschließend alle möglichen Ausführungsformen von erfindungsgemäßen MIDs wieder. Auch alle hier nicht erwähnten, aber sich durch Kombinationen aus den hier beschriebenen Ausführungsformen oder Teilen daraus ergebenden weiteren Ausführungsformen sollen daher von der vorliegenden Anmeldung mit erfasst sein. Insbesondere kann beim Aufbau des Magnetsystems auch so vorgegangen werden, dass - anders als in der Figur 2 beschrieben - zunächst die Erregerspulen auf dem Wickelkörper fixiert werden und darauf dann der ferromagnetische Kern.

## Patentansprüche

1. Magnetisch-Induktives Messgerät (1) für strömende Stoffe (Messstoff), mit einem Messrohr (2) und je einem weiteren Teilsystem
- zur Messsignalerfassung, umfassend einen Signalaufnehmer (Elektrodenanordnung (20, 22) zum Signalabgriff),
- zur Erzeugung eines Magnetfeldes, umfassend wenigstens zwei Erregerspulen (30) und einen ferromagnetischen Kern (32) (Magnetsystem), sowie
- zur umgebungsseitigen Gerätebegrenzung (Gehäuse),
**dadurch gekennzeichnet, dass** wenigstens eines der weiteren Teilsysteme ganz oder teilweise durch eine Vergussmasse gebildet und/oder in eine Vergussmasse eingebettet ist.

2. Messgerät nach Anspruch 1, **dadurch gekennzeichnet, dass** das Magnetsystem vollständig oder teilweise in eine Vergussmasse eingebettet ist.

3. Messgerät nach Anspruch 1, **dadurch gekennzeichnet, dass** das Magnetsystem in das aus einer Vergussmasse gebildete Gehäuse eingebettet ist.

4. Messgerät nach einem der Ansprüche 2 oder 3, **dadurch gekennzeichnet, dass** der ferromagnetische Kem (31, 32) in eine Vergussmasse (19) eingebettet ist.

5. Messgerät nach einem der Ansprüche 2 oder 3, **dadurch gekennzeichnet, dass** die Erregerspulen (30, 30a) zusammen mit dem ferromagnetischen Kern (32, 31) in eine Vergussmasse eingebettet sind.

6. Messgerät nach einem der Ansprüche 4 oder 5, **dadurch gekennzeichnet, dass** der ferromagnetische Kern (31, 32) aus ferromagnetischer Folie oder ferromagnetischem Blech oder ferromagnetischem Draht oder ferromagnetischem Drahtgeflecht gebildet ist.

7. Messgerät nach Anspruch 6, **dadurch gekennzeichnet, dass** der ferromagnetische Kern (31, 32) aus Eisen oder Eisen-Nickel oder Kobalt-Eisen oder Silizium-Eisen oder Aluminium-Eisen oder Ferrit gebildet ist.

8. Messgerät nach Anspruch 3, **dadurch gekennzeichnet, dass** an oder nahe der umgebungsseitigen Gerätebegrenzungsfläche (6) eine Abschirmungsschicht (40) gegen elektrische oder magnetische oder elektromagnetische Felder in die Vergussmasse eingebettet ist.

9. Messgerät nach Anspruch 8, **dadurch gekennzeichnet, dass** die Abschirmschicht (40) aus leitfähigem Kunststoff oder aus Metallfolie oder aus Metallgeflecht gebildet ist.

10. Messgerät nach einem der vorherigen Ansprüche, **dadurch gekennzeichnet, dass** an der umgebungsseitigen Gerätebegrenzung (6) eine elektrische Anschlussvorrichtung (8) angebracht ist und dass von dem Signalaufnehmer und/oder dem Messwandler und den Spulen elektrische Verbindungsleiter zu der elektrischen Anschlussvorrichtung geführt sind.

11. Messgerät nach Anspruch 10, **dadurch gekennzeichnet, dass** die elektrische Anschlussvorrichtung (8) einen Messumformer umfasst.

12. Messgerät nach einem der vorherigen Ansprüche, **dadurch gekennzeichnet, dass** eine elektronische Signalwandlerbaugruppe (24) in die Vergussmasse eingebettet ist.

13. Messgerät nach einem der vorigen Ansprüche, **dadurch gekennzeichnet, dass** das Messgerät (1) wenigstens einen weiteren Messaufnehmer (56, 57, 58) zur Erfassung wenigstens einer weiteren Messgröße des Stoffes und/oder des hydraulischen Systems (2) umfasst.

14. Messgerät nach Anspruch 13, **dadurch gekennzeichnet, dass** der erste und/oder zweite weitere Messaufnehmer (56, 57) ein Temperatursensor ist.

15. Messgerät nach Anspruch 13, **dadurch gekennzeichnet, dass** der erste und/oder zweite Messaufnehmer (58) ein Dehnungsmessstreifen ist.

16. Messgerät nach einem der vorigen Ansprüche, **dadurch gekennzeichnet, dass** mit der aus dem Messsignal des weiteren Messaufnehmers (56, 57, 58) gewonnenen Information eine Gerätediagnose, insbesondere die Überwachung der Einsatzgrenze und/oder die Ermittlung der Restlebensdauer, durchführbar ist.

17. Messgerät nach einem der vorigen Ansprüche, **dadurch gekennzeichnet, dass** die Vergussmasse ein elektrisch nicht leitfähiges, gefülltes Epoxidharz ist.

18. Messgerät nach einem der vorigen Ansprüche, **dadurch gekennzeichnet, dass** die Vergussmasse ein elektrisch nicht leitfähiges, gefülltes Polyurethan ist.

19. Verfahren zur Herstellung eines Magnetisch-induktiven Messgerätes für strömende Stoffe (Messstoffe), wobei das magnetisch-induktive Messgerät eine stoffseitige Gerätebegrenzungsfläche und eine umgebungsseitige Gerätebegrenzungsfläche aufweist sowie ein Messrohr und wenigstens je ein weiteres Teilsystem zur Messsignalerfassung (Signalaufnehmer) und zur Erzeugung eines Magnetfeldes (Magnetsystem) umfasst, **dadurch gekennzeichnet, dass** alle oder einige der weiteren Teilsysteme ganz oder teilweise in eine elektrisch nicht leitfähige Vergussmasse eingebettet werden.

20. Verfahren nach Anspruch 19, **dadurch gekennzeichnet, dass** zur Einbettung ein Vergussverfahren mit verlorener Form verwendet wird.

21. Verfahren nach Anspruch 20, **dadurch gekennzeichnet, dass** zur Einbettung ein Vergussverfahren mit wiederverwendbarer Form verwendet wird

22. Verfahren nach einem der Ansprüche 19 bis 21, **dadurch gekennzeichnet, dass** das Magnetsystem auf einem Metall-Messrohr mit konduktiven Elektroden zunächst aufgebaut, positioniert und anschließend eingegossen wird.

23. Verfahren nach einem der Ansprüche 19 bis 21, **dadurch gekennzeichnet, dass** das Magnetsystem auf einem Messrohr aus Keramik oder Faserverbundwerkstoff mit kapazitiver Elektrodenanordnung zunächst aufgebaut, positioniert und anschließend eingegossen wird.

24. Verfahren nach einem der Ansprüche 19 bis 23, **dadurch gekennzeichnet, dass** alle oder einige der weiteren Teilsysteme ganz oder teilweise in gefülltes Epoxidharz eingebettet werden.

25. Verfahren nach einem der Ansprüche 19 bis 23, **dadurch gekennzeichnet, dass** alle oder einige der weiteren Teilsysteme ganz oder teilweise in gefülltes Polyurethan eingebettet werden.
